# EUROPÄISCHE PATENTANMELDUNG

(11) **EP 4 432 381 A1**
(43) Veröffentlichungstag der Anmeldung: **18.09.2024**
(21) Anmeldenummer: 23161798.6
(22) Anmeldetag: 14.03.2023
(51) Int. Cl.: H01M 4/04, G01N 15/08, H01M 4/139, H01M 10/04, H01M 10/058, H01M 10/48

(54) **POROSITÄTSERMITTLUNG VON ZELLELEKTRODEN FÜR EINE BATTERIEZELLENHERSTELLUNG SOWIE BATTERIEZELLENHERSTELLUNGSVERFAHREN**

(71) Anmelder: Siemens Aktiengesellschaft, 80333 München (DE)
(72) Erfinder: Schulte, Sascha, 91315 Höchstadt (DE)
(74) Vertreter: Siemens Patent Attorneys

(57) **Zusammenfassung**

Es wird ein Verfahren zur Ermittlung einer Porosität einer oder mehrerer Zellelektroden (1) im Rahmen einer Herstellung von Batteriezellen, vorgeschlagen, bei dem die Zellelektroden (1) mittels eines Elektrolytes (2) befüllt werden. Das erfindungsgemäße Verfahren ist gekennzeichnet dadurch, dass die Porosität mittels eines Füllstandes und/oder einer Füllstandsänderung des Elektrolytes (2) ermittelt wird.

Weiterhin betrifft die Erfindung ein Verfahren zur Herstellung einer Batteriezelle.

## Beschreibung

Die Erfindung betrifft ein Verfahren gemäß dem Oberbegriff des Patentanspruches 1 sowie ein Verfahren gemäß dem Oberbegriff des Patentanspruches 9.

Bei einer Produktion von Batteriezellen, insbesondere von Lithium-Ionen-Batteriezellen, Natrium-Ionen-Batteriezellen oder vergleichbaren Batterietypen, wird das Verhalten der Zelle maßgeblich durch die Porosität der Elektrodenbeschichtung der Zellelektrode bestimmt. Durch die Mikroporen der Elektrodenbeschichtung kann der zum Ionentransport erforderliche Elektrolyt innerhalb der Beschichtung an möglichst viele Oberflächenbereiche des Aktivmaterials gelangen, insbesondere ebenfalls zu tieferliegenden Schichten.

Weiterhin ist es erforderlich die beschichtete Zelle nach den ersten Produktionsschritten, das heißt nach einer Nassbeschichtung und einer Trocknung, mittels eines Kalanders zu verpressen und zu glätten. Dadurch wird die Oberfläche homogenisiert und weiterhin das Verhältnis zwischen Porosität und Beladungsdichte beeinflusst, was letztendlich Leistungsfähigkeit sowie Energiedichte der Batteriezellen beziehungsweise der fertigen Batterie beeinflusst.

Nach dem Stand der Technik existieren keine direkten sogenannten Inline-Messmethoden, mit denen die Porosität ermittelt werden kann. Produktionsbegleitend werden im Labor einzelne Proben mit Methoden, wie beispielsweise einer Quecksilberporosimetrie, untersucht. Nachteilig hieran ist, dass die genannten Stichproben keine aktuellen Ergebnisse liefern, da typischerweise erst mit erheblichem Zeitverzug eine Aussage über die Eignung einer ganzen Produktionscharge gemacht werden kann.

Der vorliegenden Erfindung liegt die Aufgabe zugrunde, ein Verfahren zur Ermittlung einer Porosität einer Batteriezelle im Rahmen einer Batteriezellenherstellung bereitzustellen.

Die Aufgabe wird durch ein Verfahren mit den Merkmalen des unabhängigen Patentanspruches 1 sowie durch ein Verfahren mit den Merkmalen des unabhängigen Patentanspruches 9 gelöst. In den abhängigen Patentansprüchen sind vorteilhafte Ausgestaltungen und Weiterbildungen der Erfindung angegeben.

Das erfindungsgemäße Verfahren zur Ermittlung einer Porosität einer oder mehrerer Zellelektroden im Rahmen einer Herstellung von Batteriezellen, bei dem die Zellelektroden mittels eines Elektrolytes befüllt werden, insbesondere mittels einer festgelegten Menge des Elektrolyten, ist gekennzeichnet dadurch, dass die Porosität mittels eines Füllstandes und/oder einer Füllstandsänderung des Elektrolytes ermittelt wird.

Gemäß der vorliegenden Erfindung wird die Porosität der Zellelektrode mittels des Elektrolyten, welcher bei der Batteriezellenherstellung zur Befüllung vorgesehen ist, ermittelt. Hierbei wird erfindungsgemäß die Porosität mittels des Füllstandes des Elektrolyten und/oder mittels einer Füllstandsänderung des Elektrolyten ermittelt. Mit anderen Worten wird eine Absorptionsmenge (Füllstand) und/oder eine Absorptionsrate des Elektrolyten zur Ermittlung der Porosität beziehungsweise als Maß für die Porosität verwendet.

In Abhängigkeit der Porosität der Zellelektrode ändert sich die Aufnahmerate des Elektrolyten (Füllstandsänderung) sowie der Füllstand. Als Füllstand wird insbesondere ein im Wesentlichen stationärer Füllstand, der sich nach einer festgelegten einstellt, verwendet.

Beim Befüllen der Zellelektrode mit dem Elektrolyt dringt der Elektrolyt, beispielsweise durch Kapillarkräfte, typischerweise erst nach einer bestimmten Zeit zu allen Porenräumen, insbesondere eines Aktivmaterials der Zellelektrode, vor.

Durch eine zunehmende Aufnahme des Elektrolyten in den Porenräumen und deren fluidische Verbindungen sinkt der Füllstand des Elektrolyten, insbesondere bei Batteriezellen mit festem Gehäuse, stetig ab. Bei Batteriezellen mit nicht festen Gehäuse, beispielsweise Pouch-Zellen, verringert sich hingegen ihr Volumen. Somit kann in beiden genannten Fällen, über das Erfassen des Füllstandes, beispielsweise über eine Füllhöhe und/oder ein Volumen, und/oder durch das Erfassen der Füllstandsänderung, beispielsweise über eine zeitliche Änderung der Füllhöhe und/oder eine zeitliche Änderung des Volumens, die Porosität ermittelt werden. Gemäß der Erfindung erfolgt somit keine von der Produktion/Herstellung der Batteriezelle getrennte Messung, sondern die Messung der Porosität, wird synergetisch über die hierzu erfindungsgemäß vorgesehene Verwendung des Elektrolyten, in den Herstellungsprozess der Batteriezelle eingebunden. Hierbei kann zudem vorteilhafterweise die Porosität jeder einzelnen Zellelektrode ermittelt werden.

Typischerweise erfolgt das Befüllen mit dem Elektrolyten in einem der letzteren Schritte des Herstellungsverfahrens der Batteriezelle. Nach dem Befüllen wird die Batteriezelle typischerweise verschlossen und ist somit grundsätzlich hergestellt. Die beim Befüllen verwendete Menge des Elektrolyten ist festgelegt und typischerweise für Zellen des gleichen Batterietyps identisch. Somit hängt der Füllstand in der einzelnen Zelle beziehungsweise die Füllstandsänderung im Wesentlichen von der jeweiligen Porosität ab, da stets dieselbe festgelegte Elektrolytmenge beziehungsweise dasselbe festgelegte Elektrolytvolumen eingefüllt wird. Das ist deshalb der Fall, da das poröse Aktivmaterial der Zellelektrode wenigstens eine Teil des Elektrolyten in seinen Poren aufnimmt. Je nach Ausbildung dieser Poren wird mehr oder weniger des Elektrolyten aufgenommen. Ebenfalls hängt die Geschwindigkeit der genannten Aufnahme (Absorptionsrate), die die Füllstandsänderung bestimmt, von der Ausbildung der Poren und ihren Verbindungen und somit von der Porosität ab.

Mit anderen Worten kann je nach Porengröße, insbesondere Querschnitten, mehr oder weniger viel Elektrolyt schneller oder langsamer durch das Aktivmaterial und somit durch die Zellelektrode aufgenommen werden. Beim Befüllen von Zellen mit einem festen Gehäuse, beispielsweise einem kastenförmigen oder zylinderförmigen Gehäuse, sinkt der Elektrolytpegel beziehungsweise die Füllstandshöhe des Elektrolyten innerhalb des Gehäuses der Zellelektrode beziehungsweise der Batterie somit mit der Zeit und erreicht nach einer bestimmten Zeit eine im Wesentlichen stationären Füllstandshöhe. Durch Messen der zeitlichen Änderungen des Füllstandes kann somit die Füllstandsänderung ermittelt werden. Der Füllstand, der zum Ermitteln der Porosität verwendet wird, ist besonders bevorzugt der genannte stationäre Füllstand. Beide genannten Messgrößen bilden ein Maß für die Porosität aus, die zusammen oder einzeln erfindungsgemäß verwendet werden.

Die Porosität ist ein wichtiger technischer Parameter der Batteriezellenherstellung. Die vorliegende Erfindung ermöglicht es somit, diese im Rahmen der Herstellung, ohne aufwendige nachgelagerte Laboruntersuchungen, zu ermitteln. Dadurch können Batteriezellen beziehungsweise Batterien, deren Porosität unter oder oberhalb eines jeweils festgelegten Schwellenwertes liegen aussortiert werden. Zudem können vorgelagerte Herstellungsprozesse verbessert werden, bis ein gewünschtes beziehungsweise vorteilhaftes Maß an Porosität erreicht ist.

Das erfindungsgemäße Verfahren zur Herstellung einer Batteriezelle, bei dem eine oder mehrere Zellelektroden mittels eines Elektrolytes befüllt werden, insbesondere mit einer festgelegten Elektrolytmenge, ist gekennzeichnet dadurch, dass eine Porosität der Zellelektroden mittels eines Verfahrens gemäß der vorliegenden Erfindung und/oder einer ihrer Ausgestaltungen ermittelt wird, und in Abhängigkeit der ermittelten Porosität ein dem Befüllen der Zellelektroden mit Elektrolyt vorgelagerter Herstellungsprozess geregelt wird.

Es ergeben sich zum erfindungsgemäßen Verfahren zur Ermittlung der Porosität gleichartige, gleichwertige und gleichwirkende Vorteile und/oder Ausgestaltungen des erfindungsgemäßen Verfahrens zur Herstellung einer Batteriezelle.

Gemäß einer vorteilhaften Ausgestaltung der Erfindung wird die Füllstandsänderung mittels einer Messung der zeitlichen Abhängigkeit des Volumens der Batteriezelle ermittelt.

Das Ermitteln der Füllstandsänderung mittels der zeitlichen Abhängigkeit des Volumens ist insbesondere für Zellen vorteilhaft, die kein festes Gehäuse aufweisen, beispielsweise für Pouch-Zellen. Durch das Befüllen denen sich diese zunächst aus und erreichen anschließend, durch die Aufnahme des Elektrolyten innerhalb der Poren, ein kleineres, stationäres Volumen. Ergänzend kann das erreichte stationäre Volumen als Maß für die Porosität herangezogen werden. Durch Erfassen der zeitlichen Volumenänderung und/oder des erreichten stationären Volumens kann wiederum auf die Porosität geschlossen werden. Mit anderen Worten wird bevorzugt als Maß der Füllstandsänderung und somit als Maß der Porosität die zeitliche Änderung des Volumens der Batteriezelle herangezogen.

In einer vorteilhaften Weiterbildung der Erfindung wird die Füllstandsänderung mittels einer Messung der zeitlichen Abhängigkeit der Füllstandshöhe des Elektrolyt ermittelt.

Das Ermitteln der Füllstandsänderung mittels der zeitlichen Abhängigkeit der Füllstandshöhe ist besonders für Zellen mit einem festen Gehäuse vorteilhaft, beispielsweise für Hardcasezellen und/oder zylindrische Zellen. Hierbei wird der Elektrolyt in das Gehäuse eingefüllt und der Füllstand und/oder die Füllstandsänderung kann über die Füllstandhöhe beziehungsweise die zeitliche Änderung des Füllstandshöhe ermittelt werden.

Gemäß einer vorteilhaften Ausgestaltung der Erfindung wird die Füllstandsänderung mittels wenigstens zwei Messungen der Füllhöhe des Elektrolytes zu zwei verschiedenen Zeitpunkten ermittelt.

Besonders bevorzugt wird eine initiale und eine finale Füllstandhöhe erfasst. Die finale Füllstandshöhe ist erreicht, wenn die Füllstandshöhe sich im Wesentlichen nicht mehr ändert, das heißt stationär ist. Mit den zwei Messung sind somit zwei Füllstandshöhen zu zwei verschieden Zeitpunkten erfasst, sodass einer oder mehrere der erfassten Füllstände und/oder die dadurch ermittele zeitliche Änderung der Füllstandshöhen zur Ermittlung der Porosität verwendet werden kann.

In einer vorteilhaften Weiterbildung der Erfindung wird der Füllstand beziehungsweise die Füllstandsänderung mittels eines nicht invasiven Messverfahrens erfasst.

Dadurch wird vorteilhafterweise eine effiziente und nicht störende Ermittlung des Füllstandes beziehungsweise der Füllstandsänderung ermöglicht.

Als nicht invasive Verfahren können bevorzugt Ultraschallverfahren, Röntgenverfahren und/oder 3D-Scan-Verfahren verwendet werden. Ultraschallverfahren und Röntgenverfahren sind insbesondere für Batterien mit festem Gehäuse, beispielsweise Hardcasezellen und/oder zylindrische Zellen, vorteilhaft. Ein 3D-Scan-Verfahren ist insbesondere für Batterien mit nicht festem Gehäuse vorteilhaft, beispielsweise für Pouch-Zellen.

Gemäß einer vorteilhaften Ausgestaltung der Erfindung wird die Porosität mittels eines Proportionalitätsfaktors aus der Füllstandshöhe und/oder aus der Füllstandsänderung ermittelt.

Mit anderen Worten wird approximativ angenommen, dass die Porosität proportional zu der erfassten Füllstandshöhe, beispielsweise am Ende des Befüllens, und/oder zur erfasste Füllstandsänderung ist. Es hat sich herausgestellt, dass diese lineare Approximation ausreichend ist, um für die Produktion die Porosität ausreichend genau zu ermitteln. Alternativ kann ebenfalls ein nichtlinearer Zusammenhang vorgesehen sein, der beispielsweise mittels Referenzmessung und einem entsprechenden nichtlinearen Fit ermittelt wird.

Weiterhin ist es vorteilhaft, wenn der Proportionalitätsfaktor durch Referenzmessungen ermittelt wird. Hierbei kann das Ermitteln des Proportionalitätsfaktors durch einen linearen Fit erfolgen.

In einer vorteilhaften Weiterbildung der Erfindung wird ein Kalandrierprozess der Batteriezellenherstellung in Abhängigkeit der ermittelten Porosität geregelt.

Das ist deshalb von Vorteil, da die Porosität, insbesondere eine Oberflächenporosität des Aktivmaterials der Zellelektrode, von dem Kalandrierprozess abhängig ist. Der Kalandrierprozess kann somit basierend auf der ermittelten Porosität geregelt und/oder eingestellt werden, bis ein erforderliches beziehungsweise ein bestmögliches Maß an Porosität erreicht ist. Dadurch wird eine vorteilhafte Rückkopplung auf den Herstellungsprozess der Batteriezelle ermöglicht, sodass die Leistung der hergestellten Batterien beziehungsweise Batteriezellen verbessert werden kann und zudem der Ausschuss an Batterien beziehungsweise Batteriezellen ebenfalls reduziert werden kann.

Hierbei ist es besonders bevorzugt, wenn die Regelung des Kalandrierprozesses derart erfolgt, dass ein Anpressdruck in Abhängigkeit der ermittelten Porosität eingestellt wird.

Mit anderen Worten wird der Anpressdruck des Kalandrierprozesses der Zellelektrode in Abhängigkeit der ermittelten Porosität geregelt. Dadurch wird ein effizientes und vorteilhaftes Regelverfahren zur Einstellung der Porosität ausgebildet.

Gemäß einer vorteilhaften Ausgestaltung der Erfindung wird ein thermisches Aufbringen eines Separators der Batteriezelle in Abhängigkeit der ermittelten Porosität geregelt.

Typischerweise wird der Separator thermisch aufgebracht, insbesondere durch Verschweißen. Hierbei wird der Separator für einen bestimmten, typischerweise kurzen Zeitraum, erhitzt und aufgeklebt. Durch das Aufbringen des Separators, insbesondere durch die Zeit seiner Erhitzung und die Temperatur, wird ebenfalls die Porosität beeinflusst. Durch ein Regeln des thermischen Aufbringens, beispielsweise der Aufbringzeit und/oder der Temperatur, wird somit ein Einstellen der Porosität ermöglicht.

In einer vorteilhaften Weiterbildung der Erfindung werden eine oder mehrere Hardcasezellen und/oder zylindrische Zellen hergestellt werden.

Das ist deshalb von Vorteil, da die Porosität bei den genannten Zelltypen vereinfacht über die Füllstandshöhe, insbesondere über die erreichte stationäre Füllstandshöhe, und/oder die Füllstandshöhenänderung ermittelt werden kann. Hierzu können vorteilhafterweise im Gegensatz zu 3D-Scan-Verfahren einfachere Verfahren, wie beispielsweise Ultraschallverfahren und/oder Röntgenverfahren, verwendet werden.

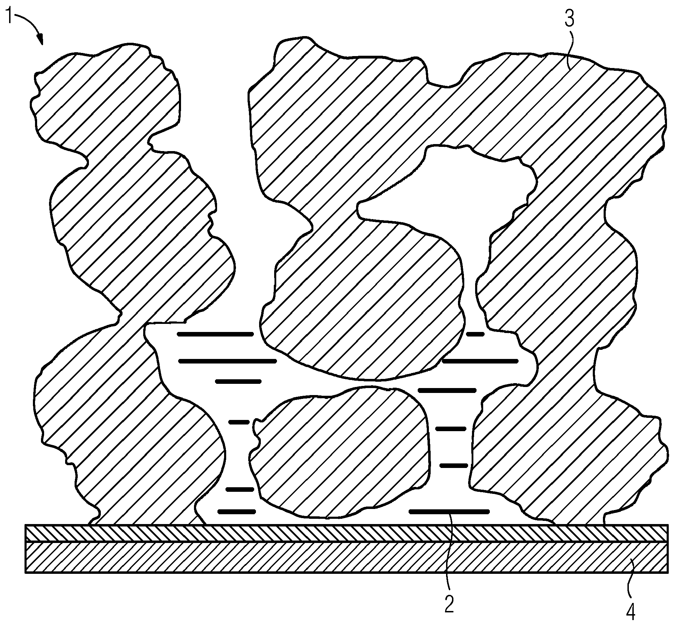

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert einen Querschnitt eines Abschnittes einer Zellelektrode.

Gleichartige, gleichwertige oder gleichwirkende Elemente können in der Figur mit denselben Bezugszeichen versehen sein.

Die Figur zeigt eine deutlich vereinfachte Darstellung eines Querschnitts einer Zellelektrode 1.

Die Zellelektrode 1 umfasst ein poröses Aktivmaterial 3, welches auf einer Metallfolie 4 aufgebracht ist. Die Figur zeigt das Aktivmaterial 3 nach einem Kalandrierprozess, das heißt nach dem die Beschichtung 3 beziehungsweise das Aktivmaterial 3 verpresst und geglättet wurde.

Nach dem Kalandrierprozess können sich, wie durch die Figur verdeutlich, einzelne Poren an der Oberfläche des Aktivmaterials 3 verschließen. Somit beeinflusst der Kalandrierprozess die Porosität der Zellelektrode 1 beziehungsweise ihres Aktivmaterials 3.

Beim Herstellungsverfahren der Zellelektrode 1 wird diese mit einer festgelegten Menge eines Elektrolyten 2 befüllt. Dadurch bildet sich zunächst ein anfänglicher Füllstand des Elektrolyten 2 aus. Mit der Zeit sinkt der Füllstand, insbesondere die Füllhöhe, des Elektrolyten 2 durch seine Aufnahme in den Poren des porösen Aktivmaterials 3 ab und erreicht nach einer bestimmten Zeit einen stationäre Füllstand. Hierbei wird die Aufnahmeenge (Füllstand) im Wesentlichen durch den vorhanden Porenraum und die Aufnahmerate (Füllstandsänderung) im Wesentlichen durch die Verbindungen zwischen den einzelnen Porenräumen bestimmt.

Somit kann mittels des Füllstandes, insbesondere mittels des erreichten stationären Füllstandes, und/oder mittels der Füllstandsänderung über die Zeit die Porosität des Aktivmaterials 3 und somit der Zellelektrode 1 ermittelt werden. Hierbei ist ein Grundgedanke der Erfindung, dass für das Ermitteln der Porosität ein Herstellungsprozess, nämlich das Befüllen mit Elektrolyt 2, sowie ein Herstellungsmaterial, nämlich der Elektrolyt 2 selbst, verwendet werden.

Der Füllstand und/oder die Füllstandsänderung kann bevorzugt mittels Ultraschallverfahren und/oder Röntgenverfahren nicht invasiv ermittelt werden. Weiterhin ist ein Ermitteln mittels 3D-Scan-Verfahren, insbesondere bei Pouch-Zellen über ihre Volumenänderung, vorteilhaft.

Somit kann das Verfahren während des Produktionsprozesses nichtinvasiv und zerstörungsfrei in Echtzeit an allen Zellen durchgeführt werden, was die Genauigkeit und die Reaktionsgeschwindigkeit gegenüber dem Stand der Technik deutlich erhöht.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Zellelektrode
- 2: Elektrolyt
- 3: Aktivmaterial
- 4: Metallfolie

## Patentansprüche

1. Verfahren zur Ermittlung einer Porosität einer oder mehrerer Zellelektroden (1) im Rahmen einer Herstellung von Batteriezellen, bei dem die Zellelektroden (1) mittels eines Elektrolytes (2) befüllt werden, **gekennzeichnet dadurch, dass** die Porosität mittels eines Füllstandes und/oder einer Füllstandsänderung des Elektrolytes (2) ermittelt wird.

2. Verfahren gemäß Anspruch 1, **gekennzeichnet dadurch, dass** die Füllstandsänderung mittels einer Messung der zeitlichen Abhängigkeit des Volumens der Batteriezelle ermittelt wird.

3. Verfahren gemäß Anspruch 1 oder 2, **gekennzeichnet dadurch, dass** die Füllstandsänderung mittels einer Messung der zeitlichen Abhängigkeit der Füllstandshöhe des Elektrolyt (2) ermittelt wird.

4. Verfahren gemäß Anspruch 3, **gekennzeichnet dadurch, dass** die Füllstandsänderung mittels wenigstens zwei Messungen der Füllhöhe des Elektrolytes (2) zu zwei verschiedenen Zeitpunkten ermittelt wird.

5. Verfahren gemäß einem der vorhergehenden Ansprüche, **gekennzeichnet dadurch, dass** der Füllstand beziehungsweise die Füllstandsänderung mittels eines nicht invasiven Messverfahrens erfasst wird.

6. Verfahren gemäß Anspruch 5, **gekennzeichnet dadurch, dass** als nicht invasives Messverfahren ein Ultraschallverfahren, ein Röntgenverfahren und/oder ein 3D-Scan-Verfahren verwendet wird.

7. Verfahren gemäß einem der vorhergehenden Ansprüche, **gekennzeichnet dadurch, dass** die Porosität mittels eines Proportionalitätsfaktors aus der Füllstandshöhe und/oder aus der Füllstandsänderung ermittelt wird.

8. Verfahren gemäß Anspruch 7, **gekennzeichnet dadurch, dass** der Proportionalitätsfaktor mittels einer oder mehrerer Referenzmessungen ermittelt wurde.

9. Verfahren zur Herstellung einer Batteriezelle, bei dem eine oder mehrere Zellelektroden (1) mittels eines Elektrolytes (2) befüllt werden, **gekennzeichnet dadurch, dass** eine Porosität der Zellelektroden (1) mittels eines Verfahrens gemäß einem der vorhergehenden Ansprüche ermittelt wird, und in Abhängigkeit der ermittelten Porosität ein dem Befüllen der Zellelektroden (1) mit Elektrolyt vorgelagerter Herstellungsprozess geregelt wird.

10. Verfahren gemäß Anspruch 9, **gekennzeichnet dadurch, dass** ein Kalandrierprozess der Batteriezellenherstellung in Abhängigkeit der ermittelten Porosität geregelt wird.

11. Verfahren gemäß Anspruch 10, **gekennzeichnet dadurch, dass** die Regelung des Kalandrierprozesses derart erfolgt, dass ein Anpressdruck in Abhängigkeit der ermittelten Porosität eingestellt wird.

12. Verfahren gemäß einem der Ansprüche 9 bis 11, **gekennzeichnet dadurch, dass** ein thermisches Aufbringen eines Separators der Batteriezelle in Abhängigkeit der ermittelten Porosität geregelt wird.

13. Verfahren gemäß einem der Ansprüche 9 bis 12, **gekennzeichnet dadurch, dass** eine oder mehrere Hardcasezellen und/oder zylindrische Zellen hergestellt werden.
